# EUROPÄISCHE PATENTSCHRIFT

(11) **EP 1 008 735 B1**
(45) Veröffentlichungstag und Bekanntmachung des Hinweises auf die Patenterteilung: **16.06.2004**
(21) Anmeldenummer: 99122995.6
(22) Anmeldetag: 19.11.1999
(51) Int. Cl.: F02B 37/007, F02B 37/013, F02B 37/18

(54) **Vorrichtung zum Aufladen eines Verbrennungsmotors**
Supercharger device for an internal combustion engine
Dispositif de suralimentation d'un moteur à combustion interne

(30) Priorität: 10.12.1998 DE 19856960
(43) Veröffentlichungstag der Anmeldung: 14.06.2000
(73) Patentinhaber: Udo Mailänder GmbH, D-74321 Bietigheim-Bissingen (DE)
(72) Erfinder: Mailänder, Udo, 74321 Bietigheim-Bissingen (DE)
(74) Vertreter: Schiering, Hans, Dipl.-Ing.

(56) Entgegenhaltungen:
- DE-C- 4 434 777
- DE-U- 29 723 421
- GB-A- 705 767
- US-A- 4 570 442

## Beschreibung

Die Erfindung betrifft eine Vorrichtung zum Aufladen eines Verbrennungsmotors, bei der die Verdichter zweier mit ihren Turbinen in Parallelanordnung an den Abgassammler des Verbrennungsmotors gestaffelt anschaltbarer Abgasturbolader in Reihenanordnung mit einem sämtlichen Zylindern des Verbrennungsmotors gemeinsamen Ladeluftverteiler verbunden sind, wobei der Verdichter des bei geringerem Ladeluftbedarf allein betriebenen Abgasturboladers zwischen dem Ladeluftverteiler und dem Verdichter des hinsichtlich der eigenständig förderbaren Luftmasse größer bemessenen zweiten Abgasturboladers angeordnet ist.

Durch die Zuhilfenahme der Aufladung läßt sich in einem kleinen Verbrennungsmotor die Leistung eines ansonsten erheblich größeren Verbrennungsmotors verwirklichen. Im Falle einer vorgegebenen Nennleistung kann der Motor aufgrund seiner Aufladung beträchtlich verkleinert werden. Bei der Aufladung von Verbrennungsmotoren mit Abgasturboladern ergibt sich der Zielkonflikt, daß einerseits durch die Aufladung eine Steigerung der Nennleistung ermöglicht wird und andererseits dazu die geometrisch-mechanische Verdichtung proportional zur gewünschten Nennleistungssteigerung herabgesetzt werden muß. Durch die Herabsetzung der geometrisch-mechanischen Verdichtung läßt aber die Leistung bzw. das Drehmoment des aufgeladenen Verbrennungsmotors im unteren Drehzahlbereich überproportional nach, was auf die bei Abgasturboladern sehr spitzige Leistungskurve in ihrem eigenen Betriebsdrehzahldiagramm zurückzuführen ist. Eine Strömungsmaschine kann nur innerhalb eines sehr schmalen Drehzahlbereichs eine optimale Strömung und damit eine hohe Leistung erbringen. Das ist das Gegenteil dessen, was man beim Verbrennungsmotor in Landfahrzeugen für die Darstellung einer Zugkrafthyperbel anstrebt. Durch den Einsatz mehrerer Abgasturbolader kann jedoch sowohl die Betriebsdrehzahlspanne des Verbrennungsmotors als auch die spezielle volumetrische Arbeitsgröße des Abgasturboladers aufgeteilt werden. Das demzufolge zeitlich versetzte Hinzuschalten der Abgasturbolader führt allerdings leicht das Aufladesystem in den Bereich des Pumpens und zum Zusammenbruch der Ladeluftströmung im hinzugeschalteten Verdichter, wenn beispielsweise die vom zweiten Verdichter mit sehr geringem Druck zunächst über ein Abblaseventil ins Freie strömende Luft in den bereits unter dem vollen Druck des ersten Verdichters stehenden Ladeluftsammler des Verbrennungsmotors gelangen soll, also von einer Strömungsmaschine mit relativ großer Strömungsgeschwindigkeit und geringer Druckaufbaumöglichkeit zu einer Kolbenmaschine mit relativ kleiner Strömungsgeschwindigkeit und relativ hoher Druckaufbaumöglichkeit.

Eine aus der Publikation DE 297 23 421 U1 bereits bekannte Vorrichtung der eingangs angeführten Art weist die Besonderheit auf, daß dem Verdichter des größeren Abgasturboladers ein dritter Verdichter eines mit seiner Turbine über ein eigenes Bypassventil in Parallelschaltung zur ersten Turbine an den Abgassammler angeschlossenen und hinsichtlich der eigenständig förderbaren Luftmasse gegenüber dem größeren der beiden anderen Abgasturbolader seinerseits größer bemessenen Abgasturboladers in Reihe vorgeschaltet ist. Damit wird bei dem Verbrennungsmotor in Verbindung mit einer Leistungssteigerung zugleich eine Senkung des Kraftstoffverbrauchs und der Schadstoffemissionen erreicht, das Beschleunigungsverhalten im Niedrigdrehzahlbereich verbessert und ein übergangsharmonisches Betriebsspektrum von sehr niedriger Drehzahl bei Teillast und Vollast bis zu hoher Drehzahl bei Teillast und Vollast erzielt. Von den drei in Reihe geschalteten Verdichtern ist nur der kleinste Verdichter dauernd fördernd eingerichtet In den beiden motorfernen größeren Verdichtern wird der Druck letztlich dazu erhöht, um die in einem höheren Betriebsbereich des Verbrennungsmotors notwendige zusätzliche Ladeluft störungsfrei durch den begrenzten Querschnitt des bereits voll ausgelasteten motornahen kleinsten Verdichters zu drücken. Der nach dem Durchsatz durch den kleinsten Verdichter auftretende Druckabfall auf das von diesem allein erbrachte Druckverhältnis führt zu einem beachtlichen Temperaturrückgang, was zu einer vorteilhaften Erhöhung der geometrisch-mechanischen Verdichtung in den Zylindern des Verbrennungsmotors genutzt wird. In der Praxis macht es schon wegen der unterschiedlichen Größe der Abgasturbolader wenig Sinn, in die Verdichter-Reihenanordnung noch den Verdichter eines vierten Abgasturboladers einzufügen. Die feinere Unterteilung des Betriebsspektrums des Verbrennungsmotors durch ein gestaffeltes Betreiben von mehr als drei Abgasturboladern ohne störende Pumpeffekte erfordert weitergehende Maßnahmen.

Aus dem Dokument GB 705 767 A ist ein Verbrennungsmotor bekannt, bei dem jeder seiner zwei Zylinderreihen zwei ladeluftseitig aufeinanderfolgende Abgasturbolader zugeordnet sind, im abgasseitigen Anschluß der Zylinder jeder Zylinderreihe an die Turbinen der beiden Abgasturbolader eine feste Zweiteilung vorgenommen ist und zwischen den beiden Zweitstufe-Verdichtern und einem sämtlichen Zylindern des Verbrennungsmotors gemeinsamen Ladeluftverteiler je ein Regelventil eingefügt ist. Für eine dem Abgasaufkommen des Verbrennungsmotors folgend gestaffelte Inbetriebnahme und Außerbetriebnahme der insgesamt vier Abgasturbolader der beiden dortigen Abgasturbolader-Paarkonfigurationen gibt es keine Ansätze.

Aus dem Dokument DE 44 34 777 C ist ein Sechszylinder-Dieselmotor mit einem bei gestiegenem Abgasaufkommen abkuppelbaren Verdrängerlader bekannt, bei dem zur Differenzierung der Aufladung für unterschiedliche Betriebsbereiche und insbesondere auch zur weiteren Entlastung des Verdrängerladers in dem den sechs Zylindern des Motorblocks zugeordneten Ladeluftsammler insgesamt vier Ladelufttrennklappen eingefügt sind. Davon ist die den Ladeluftsammler am stärksten beschränkende Ladelufttrennklappe dem Kaltstart, die nächste Ladelufttrennklappe dem Start des warmen Motors, die übernächste Ladelufttrennklappe dem Leerlauf unter ca. 20°C Umgebungslufttemperatur und die den Ladeluftsammler am wenigsten beschränkende Ladelufttrennklappe dem Leerlauf über ca. 20°C Umgebungslufttemperatur zugeordnet. Hinzu kommt, daß einem ersten parallel zugeschalteten Abgasturbolader der Vollastbetrieb mit niedriger Drehzahl, einem zweiten parallel zugeschalteten Abgasturbolader der Vollastbetrieb mit mittlerer Drehzahl und einem dritten parallel zugeschalteten Abgasturbolader der Vollastbetrieb mit hoher Drehzahl zugeordnet ist. Insbesondere die zuerst geschlossene Ladelufttrennklappe hat neben der Verbesserung der Startaufladung noch eine Zusatzfunktion, indem sie die Vorwärmung der von der Versorgung mit Ladeluft zunächst ausgeschlossenen Zylinder durch Abgas ermöglicht und damit in diesen Zylindern eine zusätzlich erleichterte Selbstzündung vorbereitet.

Das Dokument US 4 570 442 A beschreibt die Alternative, daß der Ladeluftverteiler eines Hubkolben-Verbrennungsmotors von zwei Abgasturbolader-Paaren in Abhängigkeit vom Abgasaufkommen gestaffelt mit Ladeluft versorgbar ist, bei denen die beiden Abgasturbolader nicht nur ladeluftseitig sondern auch abgasseitig in Reihenanordnung miteinander verbunden sind, was die alleinige Inbetriebnahme nur eines dieser beiden Abgasturbolader ausschließt.

Der Erfindung liegt die Aufgabe zugrunde, bei einem aufgeladenen Verbrennungsmotor in Verbindung mit einer Leistungssteigerung den Kraftstoffverbrauch und die Schadstoffemission zu senken, das Beschleunigungsverhalten im Niedrigdrehzahlbereich zu verbessern, ein übergangsharmonisches Betriebsspektrum von sehr niedriger Drehzahl bei Teillast und Vollast bis zu hoher Drehzahl bei Teillast und Vollast zu erzielen und ein gestaffeltes Zu- und Abschalten einer größeren Anzahl an Abgasturboladern ohne störende Pumpeffekte zu ermöglichen.

Diese Aufgabe wird erfindungsgemäß an einer Vorrichtung der eingangs angeführten Art dergestalt gelöst, daß eine gleiche Paarkonfiguration von zwei weiteren Abgasturboladern für eine feinere Abstaffelung der Ladeluftversorgung des Verbrennungsmotors einem durch eine Ladelufttrennklappe abteilbaren Teil des Ladeluftverteilers zugeordnet ist.

Mit dem Übergang von einer Paarkonfiguration zweier Abgasturbolader auf zwei solche Paarkonfigurationen werden hierbei nicht mehr und nicht weniger als zwei Ladeluftströme vorgesehen, die sich nicht im Ladeluftverteiler vereinen, sondern bis zu den an den Zylindern des Verbrennungsmotors befindlichen Einlaßventilen voneinander getrennt gehalten sind. Bei alledem ist keiner der Zylinder des Verbrennungsmotors von der Ladeluftversorgung etwa zum Zwecke eines besseren Kaltstarts ausgenommen. Aufgrund der Getrennthaltung der Ladeluftströme kann sich der Ladeluftdruck in der hinzugeschaltteten Paarkonfiguration zweier Abgasturbolader ohne Störung durch den bereits etablierten Ladeluftdruck der voraus betriebenen Paarkonfiguration entwickeln. Innerhalb jeder Paarkonfiguration zweier Abgasturbolader ist ein Pumpeffekt oder gar ein Zusammenbruch der Ladeluftströmung beim zeitlich versetzten Hinzuschalten und Wiederabschalten eines Abgasturboladers schon dadurch vermieden, daß der zuerst allein in Betrieb befindliche motornahe kleine Verdichter seine Luft durch den in Reihenanordnung vorgeschalteten größeren Verdichter hindurchsaugt und dieser größere Verdichter bei seiner Inbetriebnahme zusätzlich Ladeluft durch den kleineren Verdichter hindurchdrückt. Damit wird verständlich, warum die oben gewürdigte bekannte Paarkonfiguration zweier Abgasturbolader für die erfindungsgemäße Lösung herangezogen ist. Die mit der Erfindung erzielten Vorteile bestehen insbesondere auch darin, daß mehr als drei ohne störende Pumpeffekte gestaffelt betriebene Abgasturbolader für eine feinere Unterteilung des betriebsspektrums des Verbrennungsmotors herangezogen werden, was zu einer Glättung der Kurve der geförderten Ladeluft über der Drehzahl des Verbrennungsmotors und zur Schaltruckverminderung im Automatikgetriebe eines Fahrzeugmotors führt. In diesem Sinne eröffnet die erfindungsgemäße Aufladevorrichtung unter anderem eine Erweiterung von vier auf sechs Abgasturbolader, bei der in jeder der Verdichter-Reihenanordnungen dem Verdichter des größeren Abgasturboladers ein dritter Verdichter eines mit seiner Turbine zu den Turbinen der beiden anderen Abgasturbolader parallel angeordneten und hinsichtlich der eigenständig förderbaren Luftmasse gegenüber dem größeren der beiden anderen Abgasturbolader seinerseits größer bemessenen Abgasturboladers vorgeordnet ist.

Ein anderer Weg wird mit der Erweiterung der erfindungsgemäßen Aufladevorrichtung von vier auf acht Abgasturbolader beschritten, indem zur weiteren Verfeinerung der Abstaffelung der Ladeluftversorgung des Verbrennungsmotors ein zweiter durch eine Ladelufttrennklappe teilbarer und mit einer gleichen Viererkonfiguration von vier zusätzlichen Abgasturboladern verbundener Ladeluftverteiler an von den Einlaßventilen für den ersten Ladeluftverteiler gesonderten zweiten Einlaßventilen der Zylinder des Verbrennungsmotors angeschlossen ist. Hierbei wird die Zahl der bis zu den Einlaßventilen des Verbrennungsmotors voneinander getrennt gehaltenen Ladeluftströme von zwei auf vier verdoppelt. Eventuell verbleibenden kleineren Ladeluftverlusten über die einzelnen Zylinder des Verbrennungsmotors kann durch den zweiten Einlaßventilen zugeordnete Vorventile mit einer an das Schaltspiel der Abgasturbolader gekoppelten Betätigungseinrichtung oder durch entsprechend angepaßte Einlaßventile begegnet werden. Vorzugsweise ist die für die Abstaffelung der Ladeluftversorgung des Verbrennungsmotors vorgesehene Steuerungseinrichtung zum bei steigendem Abgasaufkommen gegenüber dem Öffnen des abgasseitigen Schaltventils des letzten Abgasturboladers der ersten Viererkonfiguration nachrangigen Freigeben des zweiten Ladeluftverteilers eingerichtet. Damit erfährt das Betriebsspektrum des Verbrennungsmotors bereits eine problemlose Unterteilung in acht aufeinanderfolgende Betriebsbereiche und dies unter Einbeziehung der für die Reihenanordnung unterschiedlich großer Verdichter gegebenen Vorteile für die relative Erhöhung der geometrisch-mechanischen Verdichtung in den Zylindern des Verbrennungsmotors.

Ein aufgrund der in den Unteransprüchen angegebenen Erfindungsausgestaltungen bevorzugtes Ausführungsbeispiel der Erfindung ist in der stark schematischen Zeichnung dargestellt und wird im folgenden näher beschrieben.

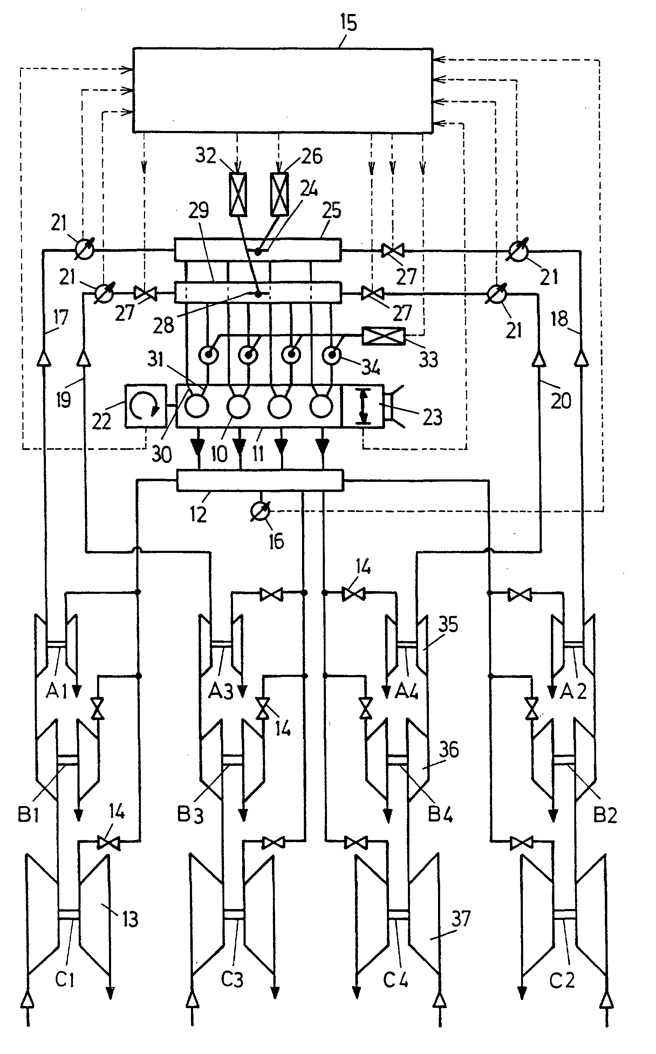

Die Zeichnung zeigt das Ausführungsbeispiel der Aufladevorrichtung in Verbindung mit einer als Vierzylindermotor ausgebildeten Brennkraftmaschine. Von den vier Zylindern 10 dieses Verbrennungsmotors 11 gelangt das mit dunklen Pfeilen gekennzeichnete Abgas zunächst in den Abgassammler 12 und von dort aus im obersten Betriebsbereich des Verbrennungsmotors 11 auf die zwölf in Parallelanordnung an den Abgassammler 12 angeschlossenen Turbinen 13 der zwölf insgesamt vorhandenen Abgasturbolader A1 bis A4, B1 bis B4 und C1 bis C4. Während die Turbine 13 des Abgasturboladers A1 ständig mit dem Abgassammler 12 in Verbindung steht, sind bei den weiteren Abgasturboladern A2 bis A4, B1 bis B4 und C1 bis C4 die Turbinen 13 über je ein Abgasschaltventil 14 mit dem Abgassammler 12 verbunden.

Von den Abgasschaltventilen 14 führt zu der Steuerungseinrichtung 15 für die Abstaffelung der Ladeluftversorgung des Verbrennungsmotors 11 je eine zur Erhaltung der Übersichtlichkeit in der Zeichnung weggelassene Signalleitung. Dadurch, daß die für die Abstaffelung der Ladeluftversorgung des Verbrennungsmotors 11 vorgesehene Steuerungseinrichtung 15 einen Meßwerte vom Abgasdruck und/oder vom Ladeluftdruck und/oder von der Drehzahl des Verbrennungsmotors 11 und/oder von der Lastanforderung des Verbrennungsmotors 11 mit digital abgespeicherten Schaltprofilen vergleichenden Rechner enthält, lassen sich leichter Druckwerte mit Drehzahlwerten und Lastanforderungswerten zur Erzeugung von Schaltsignalen kombinieren und bedarfsgerechtere Schaltsignale durch die Zusammenführung von zwei oder mehr Parametern gewinnen. Außerdem lassen sich mit dem in der Steuerungseinrichtung 15 enthaltenen Rechner auf bequeme Weise zwei oder mehr unterschiedliche Unterteilungen des Betriebsspektrums des Verbrennungsmotors 11 zur Auswahl stellen, indem zwei oder mehr voneinander verschiedene Sätze an Schaltprofilen digital abgespeichert sind. Für die Lieferung von Meßwerten an die Steuerungseinrichtung 15 des Verbrennungsmotors 11 enthält der Abgassammler 12 ein Abgasmanometer 16, jeder der vier voneinander getrennten Ladeluftstränge 17, 18, 19 und 20 ein Ladeluftmanometer 21, der Verbrennungsmotor 11 einen Drehzahlmesser 22 und das Gaspedal des Verbrennungsmotors 11 einen Wegemesser 23.

Die Zeichnung enthält unter anderem die Grundkonzeption der Aufladevorrichtung, bei der eine zu den Abgasturboladern A1 und B1 gleiche Paarkonfiguration von zwei weiteren Abgasturboladern A2 und B2 für eine feinere Abstaffelung der Ladeluftversorgung des Verbrennungsmotors 11 einem durch eine Ladelufttrennklappe 24 abteilbaren Teil des Ladeluftverteilers 25 zugeordnet ist. In dieser kleinsten Ausbaustufe der Aufladevorrichtung ist die für die Abstaffelung der Ladeluftversorgung des Verbrennungsmotors 11 vorgesehene Steuerungseinrichtung 15 zum bei steigendem Abgasaufkommen gegenüber dem Öffnen des Abgasschaltventils 14 des zweiten Abgasturboladers B1 der ersten Paarkonfiguration A1 + B1 nachrangigen Schließen der Ladelufttrennklappe 24 eingerichtet. Mit dem an die Betätigungseinrichtung 26 der Ladelufttrennklappe 24 von der Steuerungseinrichtung 15 ergehenden Schließsignal ist je ein Öffnungssignal an das Abgasschaltventil 14 des zweiten kleinen Abgasturboladers A2 und an das Ladeluftschaltventil 27 im zweiten Ladeluftstrang 18 gekoppelt.

Zu den insgesamt vier voneinander getrennten Ladeluftsträngen 17, 18, 19 und 20 kommt es, indem zur weiteren Verfeinerung der Abstaffelung der Ladeluftversorgung des Verbrennungsmotors 11 ein zweiter durch eine Ladelufttrennklappe 28 teilbarer und mit einer gleichen Viererkonfiguration von vier zusätzlichen Abgasturboladern A3, B3, A4 und B4 verbundener Ladeluftverteiler 29 an von den Einlaßventilen 30 für den ersten Ladeluftverteiler 25 gesonderten zweiten Einlaßventilen 31 der Zylinder 10 des Verbrennungsmotors 11 angeschlossen ist. In dieser Ausbaustufe der Aufladevorrichtung ist die für die Abstaffelung der Ladeluftversorgung des Verbrennungsmotors 11 vorgesehene Steuerungseinrichtung 15 zum bei steigendem Abgasaufkommen gegenüber dem Öffnen des Abgasschaltventils 14 des letzten Abgasturboladers B2 der ersten Viererkonfiguration A1 + B1 + A2 + B2 nachrangigen Freigeben des zweiten Ladeluftverteilers 29 eingerichtet. Mit dem an die Betätigungseinrichtung 32 der Ladelufttrennklappe 28 des zweiten Ladeluftverteilers 29 von der Steuerungseinrichtung 15 ergehenden Schließsignal ist je ein Öffnungssignal an das Abgasschaltventil 14 des vierten kleinen Abgasturboladers A4 und an das Ladeluftschaltventil 27 im vierten Ladeluftstrang 20 gekoppelt.

Das erstmalige Freigeben des zweiten Ladeluftverteilers 29 erfolgt durch ein von der Steuerungseinrichtung 15 ergehendes Öffnungssignal an das Ladeluftschaltventil 27 im dritten Ladeluftstrang 19 in Verbindung mit einem Öffnungssignal an das Abgasschaltventil 14 des dritten kleinen Abgasturboladers A3.

Außerdem ergeht in diesem Fall ein Schaltsignal an den gemeinsamen Stellantrieb 33 für die vier zwischen dem zweiten Ladeluftverteiler 29 und den zweiten Einlaßventilen 31 der vier Zylinder 10 des Verbrennungsmotors 11 eingefügten Vorventilen 34. Während die Einlaßventile 30 und 31 vorzugsweise im Takt einer Nockenwelle öffnen und schließen, sind die Vorventile 34 an das Schaltspiel des Abgasturboladers A3 gekoppelt. Damit lassen sich noch weitreichender Verluste an Ladeluft von den ersten Einlaßventilen 30 über die zweiten Einlaßventile 31 vermeiden.

Letztendlich zeigt die Zeichnung eine Ausbaustufe der Aufladevorrichtung, bei der in jeder der Verdichter-Reihenanordnungen 35 + 36 dem Verdichter 36 des größeren Abgasturboladers B ein dritter Verdichter 37 eines mit seiner Turbine 13 zu den Turbinen 13 der beiden anderen Abgasturbolader A und B parallel angeordneten und hinsichtlich der eigenständig förderbaren Luftmasse gegenüber dem größeren der beiden anderen Abgasturbolader A und B seinerseits größer bemessenen Abgasturboladers C vorgeordnet ist. Vorzugsweise ist hierbei die für die Abstaffelung der Ladeluftversorgung des Verbrennungsmotors 11 vorgesehene Steuerungseinrichtung 15 zum bei steigendem Abgasaufkommen gegenüber dem Öffnen des Abgasschaltventils 14 des dritten Abgasturboladers C der ersten, zweiten oder dritten Dreiergruppe an Abgasturboladern A + B + C nachrangigen Öffnen des Abgasschaltventils 14 des kleinsten Abgasturboladers A der nächsten Dreiergruppe an Abgasturboladern A + B + C eingerichtet. Damit wird beim schrittweisen Hochfahren der Ladeluftversorgung des Verbrennungsmotors 11 jeder der Ladeluftstränge 17, 18 und 19 voll ausgelastet, ehe der jeweils nächste Ladeluftstrang 18 oder 19 oder 20 zum Einsatz kommt. Beim Herunterfahren der Ladeluftversorgung des Verbrennungsmotors 11 gilt die umgekehrte Reihenfolge. Der aus der Zeichnung ersichtliche Übergang von den vier Paarkonfigurationen aus Abgasturboladern A und B zu den vier Dreiergruppen von in Motorrichtung kleiner bemessenen Abgasturboladern C, B und A bedeutet die Ausschöpfung einer der drei miteinander kombinierten Maßnahmen zur Steigerung der Abgasturbolader-Anzahl und damit zur feineren Unterteilung des Betriebsspektrums des Verbrennungsmotors 11 in eine Kette von Betriebsbereichen mit unterschiedlicher Ladeluftversorgung. Dazu kommt, daß sich mit den Dreiergruppen von in Motorrichtung kleiner bemessenen Abgasturboladern C, B und A noch stärker die Vorteile aus der relativen Erhöhung der geometrisch-mechanischen Verdichtung in den Zylindern 10 des Verbrennungsmotors 11 nutzen lassen.

## Patentansprüche

1. Vorrichtung zum Aufladen eines Verbrennungsmotors, bei der die Verdichter (35, 36) zweier mit ihren Turbinen (13) in Parallelanordnung an den Abgassammler (12) des Verbrennungsmotors (11) gestaffelt anschaltbarer Abgasturbolader (A1, B1) in Reihenanordnung mit einem sämtlichen Zylindern (10) des Verbrennungsmotors (11) gemeinsamen Ladeluftverteiler (25) verbunden sind, wobei der Verdichter (35) des bei geringerem Ladeluftbedarf allein betriebenen Abgasturboladers (A1) zwischen dem Ladeluftverteiler (25) und dem Verdichter (36) des hinsichtlich der eigenständig förderbaren Luftmasse größer bemessenen zweiten Abgasturboladers (B1) angeordnet ist, **dadurch gekennzeichnet, daß** eine gleiche Paarkonfiguration von zwei weiteren Abgasturboladern (A2, B2) für eine feinere Abstaffelung der Ladeluftversorgung des Verbrennungsmotors (11) einem durch eine Ladelufttrennklappe (24) abteilbaren Teil des Ladeluftverteilers (25) zugeordnet ist.

2. Vorrichtung nach Anspruch 1, **dadurch gekennzeichnet, daß** die für die Abstaffelung der Ladeluftversorgung des Verbrennungsmotors (11) vorgesehene Steuerungseinrichtung (15) zum bei steigendem Abgasaufkommen gegenüber dem Öffnen des Abgasschaltventils (14) des zweiten Abgasturboladers (B1) der ersten Paarkonfiguration (A1, B1) nachrangigen Schließen der Ladelufttrennklappe (24) eingerichtet ist.

3. Vorrichtung nach Anspruch 1, **dadurch gekennzeichnet, daß** zur weiteren Verfeinerung der Abstaffelung der Ladeluftversorgung des Verbrennungsmotors (11) ein zweiter durch eine Ladelufttrennklappe (28) teilbarer und mit einer gleichen Viererkonfiguration von vier zusätzlichen Abgasturboladern (A3, B3, A4, B4) verbundener Ladeluftverteiler (29) an von den Einlaßventilen (30) für den ersten Ladeluftverteiler (25) gesonderten zweiten Einlaßventilen (31) der Zylinder (10) des Verbrennungsmotors (11) angeschlossen ist.

4. Vorrichtung nach Anspruch 3, **dadurch gekennzeichnet, daß** die für die Abstaffelung der Ladeluftversorgung des Verbrennungsmotors (11) vorgesehene Steuerungseinrichtung (15) zum bei steigendem Abgasaufkommen gegenüber dem Öffnen des Abgasschaltventils (14) des letzten Abgasturboladers (B2) der ersten Viererkonfiguration (A1, B1, A2, B2) nachrangigen Freigeben des zweiten Ladeluftverteilers (29) eingerichtet ist.

5. Vorrichtung nach Anspruch 1 oder 3, **dadurch gekennzeichnet, daß** in jeder der Verdichter-Reihenanordnungen (35, 36) dem Verdichter (36) des größeren Abgasturboladers (B) ein dritter Verdichter (37) eines mit seiner Turbine (13) zu den Turbinen (13) der beiden anderen Abgasturbolader (A, B) parallel angeordneten und hinsichtlich der eigenständig förderbaren Luftmasse gegenüber dem größeren der beiden anderen Abgasturbolader (A, B) seinerseits größer bemessenen Abgasturboladers (C) vorgeordnet ist.

6. Vorrichtung nach Anspruch 5, **dadurch gekennzeichnet, daß** die für die Abstaffelung der Ladeluftversorgung des Verbrennungsmotors (11) vorgesehene Steuerungseinrichtung (15) zum bei steigendem Abgasaufkommen gegenüber dem Öffnen des Abgasschaltventils (14) des dritten Abgasturboladers (C) der ersten, zweiten oder dritten Dreiergruppe an Abgasturboladern (A, B, C) nachrangigen Öffnen des Abgasschaltventils (14) des kleinsten Abgasturboladers (A) der nächsten Dreiergruppe an Abgasturboladern (A, B, C) eingerichtet ist.

7. Vorrichtung nach einem der Ansprüche 1 bis 6, **dadurch gekennzeichnet, daß** die für die Abstaffelung der Ladeluftversorgung des Verbrennungsmotors (11) vorgesehene Steuerungseinrichtung (15) einen Meßwerte vom Abgasdruck und/oder vom Ladeluftdruck und/oder von der Drehzahl des Verbrennungsmotors (11) und/oder von der Lastanforderung des Verbrennungsmotors (11) mit digital abgespeicherten Schaltprofilen vergleichenden Rechner enthält.

## Claims

1. Device for supercharging an internal combustion engine, in which the compressors (35, 36) of two exhaust gas turbochargers (A1, B1), which are connectable in a staggered manner by their turbines (13) in a parallel arrangement to the exhaust gas manifold (12) of the internal combustion engine (11), are connected in a series arrangement to a charge air distributor (25) which is common to all cylinders (10) of the internal combustion engine (11), the compressor (35) of the exhaust gas turbocharger (A1), which operates alone when the need for charge air is minimal, being arranged between the charge air distributor (25) and the compressor (36) of the second exhaust gas turbocharger (B1), which is dimensioned larger with respect to the independently conveyable air mass, **characterised in that** an identical pair configuration of two further exhaust gas turbochargers (A2, B2) is assigned to a part of the charge air distributor (25) which can be separated off by a charge air separation flap (24), for a finer staggering of the charge air supply of the internal combustion engine (11).

2. Device according to Claim 1, **characterised in that** the control unit (15) provided for the staggering of the charge air supply of the internal combustion engine (11) is designed for opening the exhaust gas switch valve (14) of the second exhaust gas turbocharger (B1) of the first pair configuration (A1, B1) prior to closing the charge air separation flap (24), when the exhaust gas amount increases.

3. Device according to Claim 1, **characterised in that**, for further refinement of the staggering of the charge air supply of the internal combustion engine (11), a second charge air distributor (29), which can be separated by a charge air separation flap (28) and is connected to an identical four-element configuration of four additional exhaust gas turbochargers (A3, B3, A4, B4), is connected to second inlet valves (31) of the cylinders (10) of the internal combustion engine (11) which are separate from the inlet valves (30) for the first charge air distributor (25).

4. Device according to Claim 3, **characterised in that** the control unit (15) provided for the staggering of the charge air supply of the internal combustion engine (11) is designed for opening the exhaust gas switch valve (14) of the last exhaust gas turbocharger (B2) of the first four-element configuration (A1, B1, A2, B2) prior to enabling the second charge air distributor (29), when the exhaust gas amount increases.

5. Device according to Claim 1 or 3, **characterised in that**, in each of the compressor series arrangements (35, 36), there is arranged upstream of the compressor (36) of the larger exhaust gas turbocharger (B) a third compressor (37) of an exhaust gas turbocharger (C), which is arranged with its turbine (13) parallel to the turbines (13) of the other two exhaust gas turbochargers (A, B) and which, for its part, is dimensioned larger with respect to the independently conveyable air mass than the larger one of the other two exhaust gas turbochargers (A, B).

6. Device according to Claim 5, **characterised in that** the control unit (15) provided for the staggering of the charge air supply of the internal combustion engine (11) is designed for opening of the exhaust gas switch valve (14) of the third exhaust gas turbocharger (C) of the first, second or third group of three exhaust gas turbochargers (A, B, C) prior to opening the exhaust gas switch valve (14) of the smallest exhaust gas turbocharger (A) of the next group of three exhaust gas turbochargers (A, B, C), when the exhaust gas amount increases.

7. Device according to one of Claims 1 to 6, **characterised in that** the control unit (15) provided for the staggering of the charge air supply of the internal combustion engine (11) includes a computer which compares measured values of the exhaust gas pressure and/or of the charge air pressure and/or of the speed of the internal combustion engine (11) and/or of the load requirement of the internal combustion engine (11) with digitally stored switching profiles.

## Revendications

1. Dispositif de suralimentation d'un moteur à combustion interne, dans lequel les compresseurs (35, 36) de deux turbocompresseurs (A1, B1), dont les turbines (13) peuvent être raccordées en parallèle de façon échelonnée au collecteur (12) de gaz d'échappement du moteur (11) à combustion interne, sont reliés en série à un distributeur (25) d'air de suralimentation commun à tous les cylindres (10) du moteur (11) à combustion interne, le compresseur (35) du turbocompresseur (A1) - lequel turbocompresseur (A1) est utilisé seul en cas de faible besoin d'air de suralimentation - étant disposé entre le distributeur (25) d'air de suralimentation et le compresseur (36) du deuxième turbocompresseur (B1) - lequel turbocompresseur (B1) est conçu pour un plus grand débit d'air autonome -, **caractérisé en ce qu'**une paire, de conception identique, de deux turbocompresseurs (A2, B2) supplémentaires est associée, en vue d'un échelonnement plus fin de l'approvisionnement en air de suralimentation du moteur (11) à combustion interne, à une partie du distributeur (25) d'air de suralimentation qui peut être divisée par un volet (24) de séparation d'air de suralimentation.

2. Dispositif suivant la revendication 1, **caractérisé en ce que** l'équipement (15) de commande prévu pour l'échelonnement de l'approvisionnement en air de suralimentation du moteur (11) à combustion interne est conçu pour effectuer, en cas d'augmentation du rendement de gaz d'échappement, une fermeture du volet (24) de séparation d'air de suralimentation subordonnée à l'ouverture de la soupape (14) de commutation de gaz d'échappement du deuxième turbocompresseur (B1) de la première paire (A1, B1) de turbocompresseurs.

3. Dispositif suivant la revendication 1, **caractérisé en ce que**, afin d'affiner encore plus l'échelonnement de l'approvisionnement en air de suralimentation du moteur (11) à combustion interne, un deuxième distributeur (29) d'air de suralimentation, pouvant être divisé par un volet (28) de séparation d'air de suralimentation et relié à une double paire, de conception identique, de quatre turbocompresseurs (A3, B3, A4, B4) supplémentaires, est raccordé à des deuxièmes soupapes (31) d'admission, distinctes des soupapes (30) d'admission pour le premier distributeur (25) d'air de suralimentation, des cylindres (10) du moteur (11) à combustion interne.

4. Dispositif suivant la revendication 3, **caractérisé en ce que** l'équipement (15) de commande prévu pour l'échelonnement de l'approvisionnement en air de suralimentation du moteur (11) à combustion interne est conçu pour effectuer, en cas d'augmentation du rendement de gaz d'échappement, une activation du deuxième distributeur (29) d'air de suralimentation subordonnée à l'ouverture de la soupape (14) de commutation de gaz d'échappement du dernier turbocompresseur (B2) de la première double paire (A1, B1, A2, B2) de turbocompresseurs.

5. Dispositif suivant la revendication 1 ou 3, **caractérisé en ce que**, dans chacun des agencements en série de compresseurs (35, 36), le compresseur (36) du turbocompresseur (B) plus puissant est précédé d'un troisième compresseur (37) d'un turbocompresseur (C) dont la turbine est disposée en parallèle avec les turbines (13) des deux autres turbocompresseurs (A, B) et qui est lui-même conçu pour un plus grand débit d'air autonome que le plus puissant des deux autres turbocompresseurs (A, B).

6. Dispositif suivant la revendication 5, **caractérisé en ce que** l'équipement (15) de commande prévu pour l'échelonnement de l'approvisionnement en air de suralimentation du moteur (11) à combustion interne est conçu pour effectuer, en cas d'augmentation du rendement de gaz d'échappement, une ouverture - de la soupape (14) de commutation de gaz d'échappement du plus petit turbocompresseur (A) de la triplette suivante de turbocompresseurs (A, B, C) - subordonnée à l'ouverture de la soupape (14) de commutation de gaz d'échappement du troisième turbocompresseur (C) de la première, deuxième ou troisième triplette de turbocompresseurs (A, B, C).

7. Dispositif suivant l'une des revendications 1 à 6, **caractérisé en ce que** l'équipement (15) de commande prévu pour l'échelonnement de l'approvisionnement en air de suralimentation du moteur (11) à combustion interne contient un calculateur qui compare, à des profils de commutation mis en mémoire sous une forme numérique, des valeurs de mesure de la pression des gaz d'échappement et/ou de la pression de l'air de suralimentation et/ou du régime du moteur (11) à combustion interne et/ou des exigences de charge du moteur (11) à combustion interne.
